# EUROPEAN PATENT SPECIFICATION

(11) **EP 3 561 919 B1**
(45) Date of publication and mention of the grant of the patent: **18.11.2026**
(21) Application number: 17882712.7
(22) Date of filing: 20.12.2017
(51) Int. Cl.: C01G 53/42, C01G 53/82, H01M 4/131, H01M 4/505, H01M 10/0525, H01M 4/36, H01M 4/525

(54) **CATHODE ACTIVE MATERIAL, METHOD FOR PREPARING SAME, AND LITHIUM SECONDARY BATTERY COMPRISING SAME**
KATHODENAKTIVMATERIAL, VERFAHREN ZUR HERSTELLUNG DAVON UND LITHIUMSEKUNDÄRBATTERIE DAMIT
MATÉRIAU ACTIF DE CATHODE, SON PROCÉDÉ DE PRÉPARATION ET BATTERIE RECHARGEABLE AU LITHIUM LE COMPRENANT

(30) Priority: 22.12.2016 KR 20160176977
(43) Date of publication of application: 30.10.2019
(73) Proprietor: POSCO Holdings Inc., Seoul 06194 (KR); Research Institute of Industrial Science & Technology, Pohang-si, Gyeongsangbuk-do 37673 (KR)
(72) Inventor: LEE, Sang Hyuk, Incheon 21647 (KR); NAM, Sang Cheol, Dongdaemun-Gu., Seoul 02587 (KR)
(74) Representative: Pfenning, Meinig & Partner mbB
(86) International application number: PCT/KR2017/015131
(87) International publication number: WO 2018/117644

(56) References cited:
- WO-A1-2016/068594
- CN-A- 103 490 055
- CN-A- 105 489 876
- CN-A- 105 680 025
- KR-A- 20110 063 335
- KR-A- 20120 121 235
- KR-A- 20140 018 628
- KR-A- 20150 050 458
- KR-A- 20160 032 787
- US-A1- 2016 359 165
- YING J ET AL: "Surface treatment of LiNi"0"."8Co"0"."2O"2 cathode material for lithium secondary batteries", JOURNAL OF POWER SOURCES, ELSEVIER SA, CH, vol. 102, no. 1-2, 1 December 2001 (2001-12-01), pages 162 - 166, XP004331032, ISSN: 0378-7753, DOI: 10.1016/S0378-7753(01)00795-9
- SUN, YANG-KOOK ET AL.: "A Novel Concentration-gradient Li [Ni0.83Co0.07Mn0.10] 02 Cathode Material for High-energy Lithium-ion Batteries", J. MATER. CHEM., vol. 21, no. 27, 2011, pages 10108 - 10112, XP055092893, DOI: doi:10.1039/c0jm04242k

## Description

### [Invention Title] CATHODE ACTIVE MATERIAL, METHOD FOR PREPARING SAME, AND LITHIUM SECONDARY BATTERY COMPRISING SAME

### [Technical Field]

This specification relates to a positive active electrode material, a preparation method thereof, and a lithium rechargeable battery including the same.

### [Background Art]

A positive electrode active material, which is one of elements constituting a lithium rechargeable battery, generally has a structure capable of releasing/inserting lithium ions. The positive electrode active material having a high manganese content shows high stability and low capacity. However, it is necessary to develop a positive electrode active material having excellent capacity and stability in order to realize high-output large-sized battery type. On the other hand, the higher the nickel content of the positive electrode active material, the higher the capacity thereof. However, it is pointed out that the stability is low as compared with the positive material active material having a high manganese content, and the electrochemical capacity is reduced due to repeated charge and discharge, so that a cycle-life characteristic is poor. Specifically, in the case of the positive electrode active material containing nickel, an oxidation number of the nickel ion is changed from Ni²⁺ to Ni⁴⁺ after the lithium ion is removed, and since Ni⁴⁺ is unstable, it is chemically changed to nickel oxide (NiO). Since oxygen is generated during such a chemical change, the stability is evaluated to be low, and the nickel oxide is stable, and thus it may not exhibit its electrochemical capacity. In addition, since such a phenomenon is intensified at a higher temperature than at room temperature, there is a problem that the stability and the cycle-life characteristic at a high temperature are further deteriorated. In this regard, various researches have been carried out to improve the cycle-life characteristic while ensuring a high capacity of the lithium rechargeable battery, but a fundamental solution to the above problem has not yet been proposed.

Sun et al, J. Mater. Chem., 2011, 21, 10108 describes a concentration-gradient Li[Ni_{0.83}Co_{0.07}Mn_{0.10}]O₂ cathode material synthesized via co-precipitation, in which the core Li[Ni_{0.83}Co_{0.07}Mn_{0.10}]O₂ was encapsulated completely with a stable concentration-gradient layer having reduced Ni content.

CN105680025 describes a lithium battery cathode material which is spinel lithium nickel manganese oxide; the surface of spinel lithium nickel manganese oxide is coated with a coating; the coating comprises LiₐB_{b}O_{c} and LiMnBO₃; the structural formula of the spinel lithium nickel manganese oxide is LiM_{(x+y)}Ni_{(0.5-x)}Mn_{(1.5-y)}O₄, wherein the M is selected from at least one of Co, Al, Cr, Fe, Mg, Zr or Ti, the x is not less than 0 and is less than 0.2, and the y is not less than 0 and is less than 0.2; the LiₐB_{b}O_{c} is specifically at least one of LiBO₂, LiB₃O₅, LiB₅O₈, LiB₇O₁₁, Li₂B₄O₇, Li₃BO₃, Li₃B₅O₉, Li₃B₇O₁₂, Li₄B₂O₅ or Li₄B₆O₁₁.

KR20160032787 discloses a four-layer Li-ion cathode particle with a Ni-rich core and two intermediate shells that exhibit a continuous Ni-decreasing gradient, followed by an outer shell where Ni drops discontinuously to a lower constant level, enabling high capacity, improved thermal stability and long cycle life, and provides a scalable aqueous co-precipitation-sintering process for its preparation. WO2016068594A1 discloses a core-shell-buffer anode particle in which a lithium-metal-oxide core is surrounded by a 3-D porous buffer layer and an outer shell of aligned-crystal lithium-composite oxide, providing high-capacity, high-rate and long-life lithium-ion batteries while minimizing particle fracture during electrode rolling.

US2016359165A1 claims a layered cathode particle having a Ni-rich core, a continuous Ni-gradient layer (10-500 nm thick), and a constant-composition shell, the gradient directing Li-ion diffusion toward the particle centre to improve capacity, rate performance and cycle life.

CN103490055A provides a method for preparing a nickel-cobalt-lithium-manganate composite cathode material by coating the ternary oxide with LiMn₂O₄ (0.1-40 wt %) and a small amount of binder (0.1-5 wt %), followed by a two-stage sintering (300-700 °C then 800-1000 °C) to enhance safety, bulk density and cycle performance.

Ying. J. et al, J. Power Sources, 2001, 102, 162-166 describes a Li₂O-2B₂O₃ glass layer, formed by heating a mixture of LiNi_{0.8}Co_{0.2}O₂, LiOH·H₂O and H₃BO₃ at 500

°C for 10 h, coats the cathode particles, suppresses direct contact with the liquid electrolyte and consequently raises reversible capacity, improves cycling stability and high-temperature performance.

KR20140018628A provides a bimodal cathode active material comprising large-diameter particles and small-caliber Ni-based layered oxides whose surfaces are coated with a Mn-containing spinel compound (0.01-0.1 mol % Mn per small particle) to increase packing density and thermal stability. A lithium-ion battery incorporating the bimodal, Mn-coated cathode material together with a suitable anode and electrolyte delivers high energy density and enhanced safety.

KR20110063335A discloses a cathode active material in which a Li-intercalation host (e.g., layered LiNi/Co/Mn oxide) is surface-treated with a thin (300-800 nm) composite coating containing a metal (M₁ = Zr, Ti, Mg, V, Zn, Mo, Ni, Co or Mn) and boron, thereby improving low-temperature life, thermal stability and reducing swelling. KR20120121235A describes a core-shell cathode material, wherein a layered Li-Ni-based core (5-15 µm) is surrounded by a shell of compositionally graded layered and/or spinel oxides (100-700 nm thick), combining the high capacity of the core with the thermal stability of the shell.

KR20150050458A provides a method for dry-mixing a lithium transition-metal oxide with a boron-containing compound (0.05-1 wt %) and heat-treating the mixture at 130-300 °C to generate a uniform Li-borate coating that reduces surface Li-impurities and enhances high-temperature performance.

### [Disclosure]

### [Description of the Drawings]

The present invention has been made in an effort to provide a preparation method of a positive electrode active material having improved structural stability and electrochemical characteristics.

According to the present invention there is provided a positive electrode active material for a lithium rechargeable battery according to claim 1 and a preparation method for same according to claim 6.

The coating layer is formed to include a manganese (Mn) compound, and boron (B), a boron (B) compound, or a combination thereof.

Specifically, the coating layer includes a mixture of a spinel phase and a rock salt phase.

More specifically, the spinel phase and the rock salt phase are derived from the manganese (Mn) compound. In this case, the manganese (Mn) compound includes a lithium manganese oxide, a derivative thereof, a mixture thereof, or a combination thereof.

The coating layer includes a hyaline amorphous phase which is vitreous, and includes include a mixture of the spinel phase and the rock salt phase.

The vitreous hyaline amorphous phase is derived from the boron (B) compound. In this case, the boron (B) compound may include lithium borate, a derivative thereof, a mixture thereof, or a combination thereof.

A weight ratio of [a manganese (Mn) compound] to [boron (B), a boron (B) compound, or a combination
thereof] in the coating layer may be in a range of 1:1 to 1:10.

In a total amount of the cathode active material (100 wt%), the lithium metal oxide particles may be contained in an amount of 0.01 to 2 wt%, and the coating layer may be included as a balance.

In the meantime, the lithium metal oxide particles have a concentration gradient of nickel. Specifically, the concentration gradient of nickel has a form in which the concentration decreases from a center of the particle in a surface direction.

More specifically, the concentration gradient of nickel exists from 50 to 95 % by length of a particle radius from the center of the particle.

For the concentration gradient of nickel, the concentration decreases from the center of the particle in the surface direction until the particle has 40 mol% at 90 % by length of the particle radius when the nickel concentration at the center of the particle is taken as 100 mol%.

The lithium metal oxide particle has an average composition across the particle represented by Chemical Formula 1.

[Chemical Formula 1] Li₁₊ₘ[Ni_{1-w1-x1-y1-z1}Co_{w1}M1ₓ₁M2_{y1}M3_{z1}]₁₊ₙ O₂₋ₚ₁Xp₁

In Chemical Formula 1, M1 indicates any one element selected from a group consisting of Mn and Al. Each of M2 and M3 indicates any one element selected from a group consisting of Mg, Sn, Ca, Ge, and Ga, and X indicates any one element selected from a group consisting of F, N, and P. Each of w1, x1, y1, z1, and p1 may satisfy a following corresponding inequality: 0 < w1 ≤ 0.2, 0 ≤ x1 ≤0.1, 0 ≤ y1 ≤0.1, 0 < z1 ≤ 0.1, 0 < w1 + x1 + y1 + z1 ≤ 0.4, and 0 ≤ p1≤ 0.1.

m satisfies an inequality: -0.05 ≤ m ≤ 0.25, and n satisfies an inequality: -0.05 ≤ n ≤ 0.25.

Another exemplary embodiment of the present invention provides a preparation method of a positive electrode active material for a lithium rechargeable battery, including performing a heat treatment on a mixture of lithium metal oxide particles having a nickel-based layered structure, a Mn-supply material, and a B-supply material.

Specifically, the heat treatment is performed in a temperature range of 150 to 400 °C.

More specifically, the performing of the heat treatment may include heating at a temperature rise rate of 2 to 10 °C/min until the temperature reaches the temperature range of 150 to 400 °C; and performing the heat treatment while maintaining the reached temperature range. In this case, the performing of the heat treatment while maintaining the reached temperature range may be performed for 2 to 10 hours.

In the meantime, the mixture may contain 0.01 to 1 parts by weight of the Mn-supply material and 0.01 to 2 parts by weight of the B-supply material for 100 parts by weight of the lithium metal oxide particle.

The Mn-supply material may be manganese carbonate (MnCO₃), manganese hydroxide (Mn(OH)₂), manganese oxide (MnO₂), or a combination thereof.

The B-supply material may be boric acid (H₃BO₃), anhydrous boric acid (B₂O₃), boron carbide (B₄C), or a combination thereof.

The method includes preparing the lithium metal oxide particles before the performing of the heat treatment on the mixture. This may be done by a co-precipitation method. Specifically, particles with a concentration gradient of nickel may be prepared by using an aqueous solution of two kinds of metal salts having different molar concentrations of nickel.

A lithium rechargeable battery includes a positive electrode, a negative electrode, and an electrolyte solution, wherein the positive electrode includes the aforementioned positive electrode active material for the lithium rechargeable battery.

The cathode active material provided in the exemplary embodiment of the present invention is obtained by simultaneously coating Mn and B on surface of the nickel-based lithium metal oxide particles, thereby increasing initial efficiency of the battery and minimizing a resistance increase rate during charging/discharging at a high temperature.

### BRIEF DESCRIPTION OF THE DRAWING

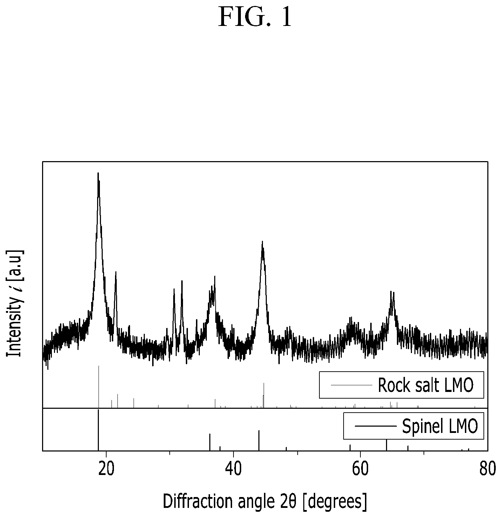

FIG. 1 illustrates a result of XRD observation of a powder obtained by heat-treating a mixture of LiOH·H₂O and MnCO₃.

### [Mode for Invention]

Hereinafter, exemplary embodiments of the present invention will be described in detail. However, it should be understood that the exemplary embodiments are merely examples, the present invention is not limited thereto, and the present invention is only defined by the scope of the following claims.

### Positive electrode active material

An exemplary embodiment of the present invention provides a positive electrode active material for a lithium rechargeable battery, including lithium metal oxide particles having a nickel-based layered structure and a coating layer disposed on a surface of each of the lithium metal oxide particles.

Herein, the coating layer includes a manganese (Mn) compound; and boron (B), a boron (B) compound, or a combination thereof.

As mentioned above, the nickel-based lithium metal oxide has a problem in that it becomes structurally unstable as the content of nickel (Ni) increases.

However, the positive electrode active material provided in the exemplary embodiment of the present invention includes a lithium metal oxide particle of a nickel-based layered structure, and has improved structural stability and electrochemical characteristics through a coating layer disposed on the surface thereof.

Specifically, the boron (B), the boron (B) compound, or the combination thereof commonly includes the B element, and contributes to structural stabilization by suppressing side reactions with an electrolyte solution on the surface of the lithium metal oxide particle. For example, when the boron (B) compound contained in the coating layer is Li₂B₄O₇, the conductivity of the surface of the coating layer is further improved, so that the electrochemical characteristic of the battery can be improved.

However, as confirmed in evaluation examples to be described later, there is a limit in improving the structural stability and electrochemical characteristic because the boron (B) compound is dissolved by the electrolytic solution after the initial stage in the case of coating with only the boron (B).

Accordingly, the present invention proposes a coating layer further including the manganese (Mn) compound in addition to the boron (B), the boron (B) compound, or the combination thereof.

The manganese (Mn) compound, commonly contain the Mn element, which forms a stable phase on the surface of the lithium metal oxide particle. For example, the manganese (Mn) compound contained in the coating layer includes a mixture of the spinel phase and the rock salt phase to improve the electrochemical characteristic.

As a result, in the case of simultaneous coating of B and Mn, residual lithium on the surface of the lithium metal oxide particle may be reduced, and at the time of application of the battery, the initial capacity and initial efficiency, the lifetime characteristic at a high temperature, and the like may be improved, and the resistance increase rate may be reduced.

Hereinafter, the positive electrode active material provided in the exemplary embodiment of the present invention will be described in detail.

The coating layer includes a mixture of the spinel phase and the rock salt phase.

More specifically, both the spinel phase and the rock salt phase are derived from the manganese (Mn) compound. In this case, the manganese (Mn) compound includes a lithium manganese oxide.

The coating layer further includes a hyaline amorphous phase which is vitreous, and includes a mixture of the spinel phase and the rock salt phase.

The vitreous hyaline amorphous phase is derived from the boron (B) compound. In this case, the boron (B) compound may include lithium borate, a derivative thereof, a mixture thereof, or a combination thereof.

Meanwhile, a weight ratio of [the manganese (Mn) compound] to [boron (B), the boron (B) compound, or a combination thereof] in the coating layer may be in a range of 1:1 to 1:10.

Within this range, an optimum effect may be accomplished such that residual lithium on the surface of the lithium metal oxide particle may be reduced, and at the time of application of the battery, the initial capacity and initial efficiency, the lifetime characteristic at a high temperature, and the like may be improved, and the resistance increase rate may be reduced.

In a total amount of the cathode active material (100 wt%), the lithium metal oxide particles may be contained in an amount of 0.01 to 2 wt%, and the coating layer may be included as a balance.

However, when the lithium metal oxide particles are contained in an amount exceeding the above range, a relatively small amount of the coating layer must be contained, and the effect expressed by the coating layer may be insignificant. On the other hand, when the lithium metal oxide particles are contained in a smaller amount than the range, basic capacity expression of the positive electrode active material may be poor.

The lithium metal oxide particles has a concentration gradient of nickel.

Specifically, the concentration gradient of nickel has a form in which the concentration decreases from a center of the particle in a surface direction.

Specifically, the structure may be stabilized by increasing a molar content of nickel at the center of the lithium metal oxide particle to a high level to increase capacity, and by increasing a molar content of a dissimilar metal (e.g., Mn, Co, Al, or the like) while reducing the molar content of nickel in the surface direction.

More specifically, the concentration gradient of nickel exists from 50 to 95 % by length of a particle radius from the center of the particle. Further, for the concentration gradient of nickel, the concentration decreases from the center of the particle in the surface direction until the particle has 40 mol% at 90 % by length of the particle radius when the nickel concentration at the center of the particle is taken as 100 mol%.

The lithium metal oxide particle has an average composition across the particle represented by Chemical Formula 1.

[Chemical Formula 1] Li₁₊ₘ[Ni_{1-w1-x1-y1-z1}Co_{w1}M1ₓ₁M2y₁M3_{z1}]₁₊ₙO₂₋ₚ₁Xp₁

In Chemical Formula 1, M1 indicates any one element selected from a group consisting of Mn and Al. Each of M2 and M3 indicates any one element selected from a group consisting of Mg, Sn, Ca, Ge, and Ga, and X indicates any one element selected from a group consisting of F, N, and P. Each of w1, x1, y1, z1, and p1 may satisfy a following corresponding inequality: 0 < w1 ≤ 0.2, 0 ≤ x1 ≤ 0.1, 0 ≤ y1 ≤ 0.1, 0 < z1 ≤ 0.1, 0 < w1 + x1 + y1 + z1 ≤ 0.4, and 0 ≤ p1 ≤ 0.1. m may satisfy satisfies an inequality of -0.05 ≤ m ≤ 0.25, and n satisfies an inequality of -0.05 ≤ n ≤ 0.25.

### Preparation method of positive electrode active material

Another exemplary embodiment of the present invention provides a preparation method of a positive electrode active material for a lithium rechargeable battery, including performing a heat treatment on a mixture of lithium metal oxide particles having a nickel-based layered structure, a Mn-supply material, and a B-supply material.

This is one of the methods for obtaining the above-mentioned positive electrode active material, and simply includes performing a heat treatment on a mixture of lithium metal oxide particles having a nickel-based layered structure, a Mn-supply material, and a B-supply material.

Hereinafter, a description of the material finally obtained by the above method will be omitted, and a specific process characteristic of the above method will be described.

Specifically, the heat treatment is performed in a temperature range of 150 to 400 °C.

More specifically, the performing of the heat treatment may include heating at a temperature rise rate of 2 to 10 °C/min until the temperature reaches the temperature range of 150 to 400 °C; and performing the heat treatment while maintaining the reached temperature range. In this case, the performing of the heat treatment while maintaining the reached temperature range may be performed for 2 to 10 hours.

In this heat treatment condition, the Mn-supply material is converted to the manganese (Mn) compound, and the B-supply material is converted to the boron (B), the boron (B) compound, or the combination thereof. Each converted form is coated on the surface of the lithium metal oxide particle.

However, when the temperature is less than the reached temperature range, there is a problem in synthesis of the boron (B) compound and synthesis of the manganese (Mn) compound, and when the temperature exceeds the reached temperature range, there is a problem that residual lithium or the like (specifically, lithium hydroxide) increases. In addition, although the temperature is within the reached temperature range, when the time is shorter than the performance time range, there is a problem in synthesis of the boron (B) compound and synthesis of the manganese (Mn) compound, and when the time exceeds the performance time range, a process ratio is increased and strength of a positive electrode active material cake is increased. Therefore, it is necessary to satisfy the aforementioned conditions.

In the meantime, the mixture may contain 0.01 to 1 parts by weight of the Mn-supply material and 0.01 to 2 parts by weight of the B-supply material for 100 parts by weight of the lithium metal oxide particle. When they are controlled to satisfy the conditions, the content of the lithium metal oxide particle in the positive electrode active material and the weight ratio of [manganese (Mn) compound] to [boron (B), a boron (B) compound, or a combination thereof] in the coating layer may be satisfied.

The Mn-supply material may be manganese carbonate (MnCO₃), manganese hydroxide (Mn(OH)₂), manganese oxide (MnO₂), or a combination thereof. It is not particularly limited as long as it is a material capable of supplying a Mn element.

The B-supply material may be boric acid (H₃BO₃), anhydrous boric acid (B₂O₃), boron carbide (B₄C), or a combination thereof. It is not particularly limited as long as it is a material capable of supplying a B element.

The method includes preparing the lithium metal oxide particles before the performing of the heat treatment on the mixture. Specifically, particles with a concentration gradient of nickel may be prepared by using an aqueous solution of two kinds of metal salts having different molar concentrations of nickel.

More specifically, an aqueous solution of a first metal salt and an aqueous solution of a second metal salt having different molar concentrations of a nickel source material may be prepared, and particles having a concentration gradient of nickel may be prepared by the co-precipitation method.

For example, a step of forming the core portion by supplying the first metal salt aqueous solution to a reactor having a pH that is constantly maintained, to which a chelating agent is supplied at a constant rate, is referred to as a first co-precipitation step for convenience sake. After the first co-precipitation step, a shell portion may be continuously formed on a surface of the core portion by gradually decreasing a supply rate of the first metal salt aqueous solution and by gradually increasing a supply rate of the second metal salt aqueous solution. This step is referred to as a second co-precipitation step for convenience sake, and particles having a concentration gradient of nickel in the form of a core-shell may be obtained.

### Lithium rechargeable battery

A lithium rechargeable battery includes: a positive electrode; a negative electrode; and an electrolyte.

This corresponds to a lithium rechargeable battery which exhibits excellent performance by including the above-described positive electrode active material, and the positive electrode active material has already been described in detail, so a detailed description will be omitted.

In addition, a configuration of a lithium rechargeable battery excluding the electrode positive active material is generally known.

Hereinafter, the examples, which are not according to the invention due to the lack of essential z1 element indicated in Chemical Formula 1 of claim 1, comparative examples thereof, and evaluation examples thereof will be described. However, the following reference examples are not exemplary embodiments of the present invention, and the present invention is not limited to the following examples.

### Example 1 (active material: manganese carbonate: boric acid = 100: 0.12: 0.15 (weight ratio), heat treatment at 250 °C)

### (1) Preparation of positive electrode active material

### (1) Preparation of lithium metal oxide particles

Lithium metal oxide particles having a concentration gradient of nickel were prepared.

Specifically, two metal salt aqueous solutions having different Ni, Co, and Mn concentrations were prepared by using NiS04.6H20 as a nickel source material, CoS04.7H20 as a cobalt source material, and MnS04·H20 as a manganese source material.

A first metal salt aqueous solution for forming the core portion was prepared by mixing the source materials to satisfy a stoichiometric mole ratio of (Ni_{0.98}Co_{0.01}Mn_{0.01})(OH)₂ in distilled water such that an entire molar concentration of the metal salt reached 2.5 M.

Independently, a second metal salt aqueous solution for forming the shell portion was prepared by mixing the source materials to satisfy a stoichiometric mole ratio of (Ni_{0.7}Co_{0.2}Mn_{0.1})(OH)₂ in distilled water such that an entire molar concentration of the metal salt reached 2.5 M.

A co-precipitation reactor in which two metal salt aqueous solution supply tanks are connected in series was prepared, and the first metal salt aqueous solution and the second metal salt aqueous solution were charged into the respective metal salt aqueous solution supply tanks.

Three liters of distilled water was placed in the co-precipitation reactor (capacity of 20 L, output of a rotary motor of 200 W), nitrogen gas was supplied at a rate of 2 L/min to remove dissolved oxygen, and it was agitated at 140 rpm while maintaining a temperature of the reactor at 50 °C.

In addition, NH₄(QH) of a 14 M concentration as a chelating agent and a NaOH solution of an 8 M concentration as a pH controlling agent were used, to continuously inject a solution mixed with NaOH:NH₄QH in a molar ratio of 1.9:1 to 2.2:1 into the reactor, while they were appropriately controlled to maintain a pH inside the reactor at 12 during the process.

As such, in a reactor having a pH that is constantly maintained, to which a chelating agent is supplied, a dosing time and amount of each metal salt solution were controlled from the two metal salt aqueous solution supply tanks connected in series.

Specifically, the co-precipitation reaction was performed until a diameter of the precipitate became about 16 µm by adjusting an impeller speed of the reactor to 500 rpm while injecting the first metal salt aqueous solution at 300 L/hour. In this case, an average residence time of the solution in the reactor was adjusted to about 24 hours by adjusting a flow rate, and a co-precipitation compound having a slightly higher density was obtained by giving a steady state duration to the reactant after the reaction reached the steady state.

Subsequently, a total supplied solution was injected at 350 L/hour by varying a mixing ratio of the first metal salt aqueous solution and the second metal salt aqueous solution, and after the lapse of 8 hours, the second metal salt aqueous solution was gradually increased as the first metal salt aqueous solution at a supply rate of 160 L/hour. In this case, the average residence time of the solution in the reactor was adjusted to 24 hours or less by controlling the flow rate, and finally the co-precipitation reaction was performed until the diameter of the precipitate became 16 µm.

Accordingly, finally obtained precipitates were lithium metal oxide particles having an average composition of Li(Ni_{0.88}Co_{0.09}Mn_{0.03})O₂ and a concentration gradient of nickel.

Specifically, when the nickel concentration at the center of the particle is taken as 100 mol%, it gradually decreases in the surface direction, and the nickel concentration at 90 % by length of the whole particle radius is 40 mol%.

The lithium metal oxide particles obtained as the precipitates were washed with water and dried. Specifically, 100 g of the lithium metal oxide particles were taken in 100 g of distilled DI water and agitated for 10 minutes to prepare a slurry, which was then filtered and dried in a vacuum drier at 100 °C for 12 hours.

### 2) Coating of surfaces of lithium metal oxide particles

In a mixer, for 100 g of the washed and dried lithium metal oxide particles, 0.15 g of boric acid (H₃BO₃) and 0.12 g of manganese carbonate (MnCO₃) were agitated for 1 minute and mixed.

The mixture was charged into a sintering furnace, heated at a rate of 3 °C/min, and heat treated at 250°C for 5 hours.

### (2) Preparation of lithium rechargeable battery.

The positive electrode active material prepared in the above, a conductive material (Denka black, carbon-based conductive material), and a binder (PVDF) were uniformly mixed in an N-methyl-2-pyrrolidone solvent at a weight ratio of 96:2:2 (description order: positive electrode active material:conductive material:binder), to prepare a slurry.

The slurry was evenly applied to an aluminum foil, compressed by a roll press, and vacuum dried in a vacuum oven at 100 °C for 12 hours to form a positive electrode.

Li-metal was used as a counter electrode, and 2032 half coin cells were formed according to a conventional manufacturing method using 1 mole of a LiPF₆ solution as a liquid electrolyte in a mixed solvent of EC:EMC = 1:2.

### Example 2 (active material: mancanese carbonate: boric acid = 100:0.24:0.15 (weight ratio), heat treatment at 250°C)

A positive electrode active material was prepared in the same manner as in Example 1 except that the weight ratio of active material: manganese carbonate:boric acid = 100:0.12:0.15 was changed to a weight ratio of 100:0.24:0.15, to form 2032 coin cells.

### Example 3 (active material:manganese carbonate:boric acid = 100:0.36:0.15 (weight ratio), heat treatment at 250 °C)

A positive electrode active material was prepared in the same manner as in Example 1 except that the weight ratio of active material :manganese carbonate:boric acid = 100:0.12:0.15 was changed to a weight ratio of 100:0.36:0.15, to form 2032 coin cells.

### Example 4 (active material:manganese carbonate:boric acid = 100:0.48:0.15 (weight ratio), heat treatment at 250 °C)

A positive electrode active material was prepared in the same manner as in Example 1 except that the weight ratio of active material: manganese carbonate:boric acid = 100:0.12:0.15 was changed to a weight ratio of 100:0.48:0.15, to form 2032 coin cells.

### Example 5 (active material:manganese carbonate:boric acid = 100:0.48:0.15 (weight ratio), heat treatment at 300 °C)

A positive electrode active material was prepared in the same manner as in Example 1 except that the weight ratio of active material:manganese carbonate:boric acid = 100:0.12:0.15 was changed to a weight ratio of 100:0.48:0.15, and the heat treatment temperature was changed from 250 °C to 300 °C, to form 2032 coin cells.

### Example 6 (active material:manganese carbonate:boric acid = 100:0.12:0.26 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of 100:012:0.26.

### Example 7 (active material:manganese carbonate:boric acid = 100:0.36:0.26 (weiaht ratio). heat treatment at 250 °C)

A positive electrode active material was prepared in the same manner as in Example 1 except that the weight ratio of active material:manganese carbonate:boric acid = 100:0.12:0.15 was changed to a weight ratio of
100:036:0.26.

### Example 8 (active material:manganese carbonate:boric acid = 100:0.12:0.32 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of 100:012:0.32.

### Example 9 (active material:manganese carbonate:boric acid = 100:0.12:0.32 (weiaht ratio). heat treatment at 300 °C)

A positive electrode active material was prepared in the same manner as in Example 1 except that the weight ratio of active material:manganese carbonate:boric acid = 100:0.12:0.15 was changed to a weight ratio of 100:012:0.32, and the heat treatment temperature was changed from 250 °C to 300 °C, to form 2032 coin cells.

### Comparative Example 1

The washed and dried lithium metal oxide particles obtained in the precoating step of Example 1 were used as a positive electrode active material. A 2032 coin battery was formed by using the positive electrode active material in the same manner as in Example 1.

### Comparative Example 2 (active material:boric acid = 100:0.15 (weight ratio). heat treatment at 250 °C)

A positive electrode active material was prepared in the same manner as in Example 1 except that the weight ratio of active material:manganese carbonate:boric acid = 100:0.12:0.15 was changed to a weight ratio of active material:boric acid = 100:0.15 excluding manganese carbonate, to form 2032 coin cells.

### Comparative Example 3 (active material:boric acid = 100:0.26 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of active material:boric acid = 100:0.26 excluding manganese carbonate, to form 2032 coin cells.

### Comparative Example 4 (active material: boric acid= 100:0.32 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of active material:boric acid = 100:0.32 excluding manganese carbonate, to form 2032 coin cells.

### Comparative Example 5 (active material: manganese carbonate= 100:0.12 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of active material: manganese carbonate = 100:0.12 excluding boric acid, to form 2032 coin cells.

### Comparative Example 6 (active material: manganese carbonate= 100:0.24 (weiaht ratio). heat treatment at 250 °C)

A positive electrode active material was prepared in the same manner as in Example 1 except that the weight ratio of active material:manganese carbonate:boric acid = 100:0.12:0.15 was changed to a weight ratio of active material: manganese carbonate = 100:0.24 excluding boric acid, to form 2032 coin cells.

### Comparative Example 7 (active material: manganese carbonate= 100:0.36 (weight ratio), heat treatment at 250 °C)

A positive electrode active material was prepared in the same manner as in Example 1 except that the weight ratio of active material:manganese carbonate:boric acid = 100:0.12:0.15 was changed to a weight ratio of active material: manganese carbonate = 100:0.36 excluding boric acid, to form 2032 coin cells.

### Evaluation Example 1

Lithium remaining on the surfaces of the respective positive electrode active materials of Examples 1 to 9 and Comparative Examples 1 to 7 was measured and is recorded in Table 1.

Initial efficiency, high-temperature cycle-life, and increase characteristic in high-temperature resistance for each battery were evaluated and are recorded in Table 1. The specific evaluation conditions are as follows.
- Reference capacity: 200 mAh/g
- Initial capacity evaluation: 0.2 C charge/0.2 C discharge after 10 hours OCV measurement
- Evaluation of high-temperature cycle-life characteristics: a charge-discharge cycle was performed 30 times under a condition of 0.3 C charge/0.3 C discharge at a high temperature (45 °C) and a potential range 4.25 V to 2.5 V.
- High-temperature DC-iR evaluation: the charge/discharge cycle was carried out at a high temperature (45 °C), and the voltage was measured 60 seconds after applying a discharge current of 0.3 C at 100 % of 4.25 V.

**(Table 1)**

| | Residual lithium (Li₂CO₃/LiOH) | Initial capacity (@ 0.2 C) (mAh/g) | Initial efficiency (%) (%) | High temperature cycle-life (Capacity retention, %) | High temperature resistance increase rate (%) | Room temperature initial resistance (Ω) |
|---|---|---|---|---|---|---|
| Comparative Example 1 | 2,258/2,813 | 211.5 | 90.4 | 85.5 | 238.5 | 19.5 |
| Comparative Example 2 | 2,549/1,929 | 216.1 | 91.9 | 94.7 | 228.2 | 23.2 |
| Comparative Example 3 | 2,455/2,680 | 215.6 | 91.8 | 95.9 | 174.5 | 25.9 |
| Comparative Example 4 | 1,988/2,970 | 215.4 | 91.3 | 95.2 | 128.3 | 27.8 |
| Comparative Example 5 | 2,032/2,421 | 211.6 | 90.5 | 85.6 | 236.2 | 21.7 |
| Comparative Example 6 | 2,124/2,256 | 211.4 | 90.6 | 86.5 | 220.5 | 23.9 |
| Cornparative Example 7 | 1,815/2,358 | 211.7 | 90.3 | 87.0 | 204.8 | 26.5 |
| Example 1 | 2,245/1,913 | 214.0 | 91.5 | 95.5 | 187.6 | 20.2 |
| Example 2 | 2,3,121/1,881 | 214.7 | 91.9 | 95.0 | 210.3 | 22.2 |
| Example 3 | 2,196/1,986 | 216.1 | 92.2 | 95.0 | 233.5 | 23.8 |
| Example 4 | 2,388/1,986 | 215.3 | 91.9 | 94.9 | 217.4 | 24.2 |
| Example 5 | 2,771/1,866 | 212.7 | 90.7 | 93.8 | 233.5 | 23.4 |
| Example 6 | 2,163/2,604 | 215.6 | 92.1 | 96.2 | 134.8 | 21.2 |
| Example 7 | 2,544/2,669 | 217.0 | 92.4 | 95.5 | 164.7 | 24.8 |
| Example 8 | 2,474/2,988 | 213.3 | 91.3 | 95.1 | 159.7 | 24.2 |
| Example 9 | 2.065/2,835 | 215.3 | 91.7 | 95.9 | 136.0 | 22.8 |

In Table 1, referring to Comparative Examples 1 to 4, as the B content of the coating layer is increased, the residual lithium tends to increase, and when the coating is excessively performed, the initial capacity tends to decrease. In addition, the high-temperature cycle-life tends to be excellent, the increase rate in the high-temperature resistance is reduced, and the initial resistance at room temperature rapidly increases.

Referring to Comparative Examples 4 to 7, as the Mn content of the coating layer increases, the initial resistance at room temperature tends to increase, and the initial capacity does not differ. In addition, it can be confirmed that the high-temperature cycle-life becomes excellent, the increase rate in the high-temperature resistance is reduced, and the initial resistance at room temperature increases.

In contrast to Comparative Examples 2 to 7, Examples 1 to 9 show that all aspects of the residual lithium, the initial capacity, the initial efficiency, the high temperature cycle-life, the increase characteristic in high-temperature resistance, and the initial resistance at room temperature are advantageous. This is due to coating with Mn together with B.

Specifically, also referring to Examples 1 to 9, the initial resistance increases as the Mn content increases, and the increase rate in the high-temperature resistance tends to increase. Referring to Example 1 to 9, as in Comparative Example 1 to 4, as the B content increases, the high temperature characteristic becomes excellent and the initial capacity decreases. However, the relationship between Mn and B does not have a significant effect, but when the content of B is excessive, addition of Mn causes the coating layer to become thicker and deteriorate in properties.

In addition, referring to results of Comparative Examples 1 to 4 and Examples 1 to 9, when a small amount of Mn is added to the same B content, the initial resistance is remarkably lowered, and it shows a better characteristic than coating Mn or B alone.

### Evaluation Example 2 (XRD)

Specifically, in Examples 1 to 8, a powder obtained by heat-treating a mixture of LiOH · H₂O and MnCO₃ as a lithium compound was determined as a target to be evaluated in order to check a phase of the coating layer formed on the surface of the lithium metal oxide particles during the heat treatment of manganese carbonate.

Specifically, the mixture was made at a mole ratio of LiOH·H₂O:MnCO₃ = 1:2, and the temperature was increased to 250 °C at 5 °C/min to be maintained for 5 hours, and then was decreased to obtain the powder, which was subjected to XRD analysis under conditions of 45 kV, 40 mA, CS 40 s/scan, and S/S: 0.02 rad to obtain an XRD graph of a 28 range of 10 to 80° (equipment name: X'pert3) (see FIG. 1).

Referring to FIG. 1, it can be seen that when manganese carbonate is mixed with a lithium compound and subjected to a heat treatment, lithium manganese oxide of a spinel phase and lithium manganese oxide of a rock salt phase are mixed.

From the results of FIG. 1, in Examples 1 to 8, it is deduced that manganese carbonate partially reacted on the surface of the lithium metal oxide particles, which are a kind of lithium compound, and thus a coating layer including a mixture of lithium manganese oxide of the spinel phase and lithium manganese oxide of the rock salt phase is formed.

Further, B partially reacts on the surface of the lithium metal oxide particles, which are a kind of lithium compound, to form Li₂B₄O₇. Li₂B₄O₇ forms a hyaline amorphous phase, which is amorphous and therefore cannot be confirmed by XRD, but in the Evaluation Example 1, since the cell performance is improved as the B content is increased, the presence thereof can be indirectly confirmed.

The present invention may be embodied in many different forms, and should not be construed as being limited to the disclosed embodiments. Therefore, it is to be understood that the above-described exemplary embodiments are for illustrative purposes only and the scope of the present invention is not limited thereto.

## Claims

1. A positive electrode active material for a lithium rechargeable battery, the material comprising:
a lithium metal oxide particle has a nickel-based layered structure and an average composition across the particle represented by Chemical Formula 1; and
a coating layer disposed on a surface of the lithium metal oxide particle,
[Chemical Formula 1] Li₁₊ₘ[Ni_{1-w1-x1-y1-z1}Co_{w1}M1ₓ₁M2_{y1}M3_{z1}]₁₊ₙO₂₋ₚ₁Xₚ₁
wherein, in Chemical Formula 1,
M1 indicates any one element selected from a group consisting of Mn and Al,
each of M2 and M3 indicates an element selected from a group consisting of Mg, Sn, Ca, Ge, and Ga,
X is one element selected from the group consisting of F, N, and P, and
each of w1, x1, y1, z1, and p1 satisfies a following corresponding inequality: 0 < w1 ≤ 0.2, 0 ≤ x1 ≤ 0.1, 0 ≤ y1 ≤ 0.1, 0 < z1 ≤ 0.1, 0 < w1 +x1 +y 1 + z1 ≤ 0.4, and 0 ≤ p1 ≤ 0.1,
m satisfies an inequality: -0.05 ≤ m ≤ 0.25, and
n satisfies an inequality: -0.05 ≤ n ≤ 0.25,
wherein the coating layer includes:
a manganese (Mn) compound; and
boron (B), a boron (B) compound, or a combination thereof, and
wherein the manganese (Mn) compound includes a lithium manganese oxide,
wherein the coating layer further includes a vitreous hyaline amorphous phase,
including a mixture of the spinel phase and the rock salt phase, and
the vitreous hyaline amorphous phase is derived from the boron (B) compound, and
wherein the spinel phase and the rock salt phase are derived from the manganese (Mn) compound,
wherein the lithium metal oxide particle has a concentration gradient of nickel,
wherein the concentration gradient of nickel has a form in which the concentration decreases from a center of the particle in a surface direction,
wherein the concentration gradient of nickel exists from 50 to 95 % by length of a particle radius from the center of the particle.
wherein the concentration gradient of nickel has a form in which the concentration is decreased from the center of the particle in the surface direction until the particle has 40 mol% at 90 % by length of the particle radius when the nickel concentration at the center of the particle is taken as 100 mol%.

2. The positive electrode active material of claim 1, wherein
the boron (B) compound includes
a lithium borate, a derivative thereof, a mixture thereof, or a combination thereof.

3. The positive electrode active material of claim 1, wherein
a weight ratio of [a manganese (Mn) compound] to [boron (B), a boron (B) compound, or a combination thereof] in the coating layer is in a range of 1:1 to 1:10.

4. A preparation method of a positive electrode active material for a lithium rechargeable battery according to claim 1, the method comprising
preparing a lithium metal oxide particle as defined in claim 1; and
performing of the heat treatment on a mixture of the lithium metal oxide particles, a Mn-supply material and a B-supply material,
wherein in the heat treatment process, the Mn-supply material is converted to the manganese (Mn) compound, and the B-supply material is converted to the boron (B), the boron (B) compound, or the combination thereof, so that each converted form is coated on the surface of the lithium metal oxide particles;
wherein the heat treatment is performed in a temperature range of 150 to 400 °C, and
wherein the Mn-supply material includes manganese carbonate (MnCO₃), manganese hydroxide (Mn(OH)₂), manganese oxide (MnO₂), or a combination thereof.

5. The preparation method of claim 4, wherein
the heat treatment includes:
heating at a temperature rise rate of 2 to 10 °C/min until the temperature reaches the temperature range of 150 to 400 °C; and
performing the heat treatment while maintaining the reached temperature range.

6. The preparation method of claim 5, wherein
the performing of the heat treatment while maintaining the reached temperature range is performed for 2 to 10 hours.

7. The preparation method of claim 4, wherein
the mixture
contains 0.01 to 1 parts by weight of the Mn-supply material and 0.01 to 2 parts by weight of the B-supply material for 100 parts by weight of the lithium metal oxide particle.

8. The preparation method of claim 4, further comprising
the preparation of the lithium metal oxide particle is done by a co-precipitation method, and
in the preparation of the lithium metal oxide particle, particles with a concentration gradient of nickel are prepared by using an aqueous solution of two kinds of metal salts having different molar concentrations of nickel.

## Patentansprüche

1. Aktivmaterial für positive Elektroden einer wiederaufladbaren Lithiumbatterie, wobei das Material umfasst:
ein Lithiummetalloxid-Teilchen, das eine Schichtstruktur auf Nickelbasis und eine durchschnittliche Zusammensetzung über das gesamte Teilchen hinweg aufweist, die durch die chemische Formel 1 dargestellt wird; und eine Beschichtungsschicht, die auf einer Oberfläche des Lithiummetalloxid-Teilchens angeordnet ist, [Chemische Formel 1] Li₁₊ₘ[Ni_{1-w1-x1-y1-z1}Co_{w1}M1ₓ₁M2_{y1}M3_{z1}]₁₊ₙO_{2-P1}X_{P1}
wobei in der chemischen Formel 1
M1 ein beliebiges Element bezeichnet, das aus einer Gruppe ausgewählt ist, die aus Mn und Al besteht,
M2 und M3 jeweils ein Element bezeichnen, das aus einer Gruppe ausgewählt ist, die aus Mg, Sn, Ca, Ge und Ga besteht,
X ein Element ist, das aus der Gruppe ausgewählt ist, die aus F, N und P besteht, und
jede der Größen w1, x1, y1, z1 und p1 jeweils die folgenden zugehörigen Ungleichungen: 0 < w1 ≤ 0,2, 0 ≤ x1 ≤ 0,1, 0 ≤ y1 ≤ 0,1, 0 < z1 ≤ 0,1, 0 < w1 + x1 + y1+ z1 ≤ 0,4 und 0 ≤ p1 ≤ 0,1 erfüllt,
m die Ungleichung: -0,05 ≤ m ≤ 0,25 erfüllt , und
n die Ungleichung: -0,05 ≤ n ≤ 0,25 erfüllt,
wobei die Beschichtungsschicht umfasst:
eine Manganverbindung (Mn); und
Bor (B), eine Borverbindung (B) oder eine Kombination davon, und
wobei die Manganverbindung (Mn) ein Lithium-Mangan-Oxid enthält,
wobei die Beschichtungsschicht ferner eine glasartige, hyaline, amorphe Phase umfasst, die eine Mischung aus der Spinellphase und der Steinsalzphase enthält, und
die glasartige, hyaline, amorphe Glasphase aus der Borverbindung (B) stammt, und
wobei die Spinellphase und die Steinsalzphase aus der Manganverbindung (Mn) stammen,
wobei das Lithiummetalloxid-Teilchen einen Konzentrationsgradienten von Nickel aufweist,
wobei der Konzentrationsgradient von Nickel so beschaffen ist, dass die Konzentration vom Zentrum des Teilchens in Richtung der Oberfläche abnimmt,
wobei der Konzentrationsgradient von Nickel über einen Bereich von 50 bis 95 % der Länge des Teilchenradius vom Zentrum des Teilchens ausgehend vorliegt,
wobei der Konzentrationsgradient von Nickel so beschaffen ist, dass die Konzentration vom Zentrum des Teilchens in Richtung der Oberfläche hin abnimmt, bis das Teilchen bei 90 % des Teilchenradius eine Konzentration von 40 Mol-% aufweist, wenn die Nickelkonzentration im Zentrum des Teilchens als 100 Mol-% angenommen wird.

2. Aktivmaterial für positive Elektroden nach Anspruch 1, wobei die Bor (B)-Verbindung ein Lithiumborat, ein Derivat davon, ein Gemisch davon oder eine Kombination davon umfasst.

3. Aktivmaterial für positive Elektroden nach Anspruch 1, wobei
ein Gewichtsverhältnis von [einer Manganverbindung (Mn)] zu [Bor (B), einer Bor(B)-Verbindung oder einer Kombination davon] in der Beschichtungsschicht im Bereich von 1:1 bis 1:10 liegt.

4. Verfahren zur Herstellung eines Aktivmaterials für positive Elektroden einer wiederaufladbaren Lithiumbatterie gemäß Anspruch 1, wobei das Verfahren umfasst
Herstellen eines Lithiummetalloxid-Teilchens gemäß Anspruch 1; und
Durchführen der Wärmebehandlung an einer Mischung aus Lithiummetalloxid-Teilchen, einem Mn-Zugabematerial und einem B-Zugabematerial,
wobei im Wärmebehandlungsprozess das Mn-Zugabematerial in die Manganverbindung (Mn) und das B-Zugabematerial in das Bor (B), in die Bor (B)-Verbindung oder in die Kombination davon umgewandelt werden, sodass jede umgewandelte Form auf die Oberfläche der Lithiummetalloxid-Teilchen aufgebracht wird;
wobei die Wärmebehandlung in einem Temperaturbereich von 150 bis 400 °C durchgeführt wird und wobei das Mn-Zugabematerial Mangancarbonat (MnCO₃), Manganhydroxid (Mn(OH)₂), Manganoxid (MnO₂) oder eine Kombination davon enthält.

5. Herstellungsverfahren nach Anspruch 4, wobei
die Wärmebehandlung umfasst:
Erwärmen mit einer Temperaturanstiegsrate von 2 bis 10 °C/min, bis die Temperatur den Bereich von 150 bis 400 °C erreicht; und
Durchführen der Wärmebehandlung unter Aufrechterhaltung des erreichten Temperaturbereichs.

6. Herstellungsverfahren nach Anspruch 5, wobei
die Wärmebehandlung unter Aufrechterhaltung des erreichten Temperaturbereichs 2 bis 10 Stunden lang durchgeführt wird.

7. Herstellungsverfahren nach Anspruch 4, wobei die Mischung
0,01 bis 1 Gewichtsteile des Mn-Zugabematerials und 0,01 bis 2 Gewichtsteile des B-Zugabematerials pro 100 Gewichtsteile des Lithiummetalloxid-Teilchens enthält.

8. Herstellungsverfahren nach Anspruch 4, ferner umfassend
die Herstellung der Lithiummetalloxid-Teilchen erfolgt mittels eines Copräzipitationsverfahrens, wobei bei der Herstellung der Lithiummetalloxid-Teilchen Teilchen mit einem Nickelkonzentrationsgradienten hergestellt werden, indem eine wässrige Lösung aus zwei Arten von Metallsalzen mit unterschiedlichen molaren Nickelkonzentrationen verwendet wird.

## Revendications

1. Matériau actif d'électrode positive pour une batterie rechargeable au lithium, le matériau comprenant :
une particule d'oxyde métallique de lithium qui présente une structure en couches à base de nickel et une composition moyenne pour l'ensemble de la particule qui est représentée par la Formule chimique 1 ; et une couche de revêtement qui est disposée sur une surface de la particule d'oxyde métallique de lithium ;
[Formule chimique 1] Li₁₊ₘ[Ni_{1-w1-x1-y1-z1}Co_{w1}M1ₓ₁M2_{y1}M3_{z1}]₁₊ₙO_{2-P1}X_{P1}
dans lequel, dans la Formule chimique 1 :
M1 désigne un quelconque élément sélectionné dans le groupe constitué de Mn et Al ;
chacun de M2 et M3 désigne un élément sélectionné dans le groupe constitué de Mg, Sn, Ca, Ge et Ga ;
X est un élément sélectionné dans le groupe constitué de F, N et P ; et
chacun de w1, x1, y1, z1 et p1 satisfait une inégalité correspondante suivante : 0 < w1 ≤ 0,2, 0 ≤ x1 ≤ 0,1, 0 ≤ y1 ≤ 0,1, 0 < z1 ≤ 0,1, 0 < w1 + x1 + y1 + z1 ≤ 0,4 et 0 ≤ p1 ≤ 0,1 ;
m satisfait une inégalité : -0,05 ≤ m ≤ 0,25 ; et
n satisfait une inégalité : -0,05 ≤ n ≤ 0,25 ;
dans lequel la couche de revêtement inclut :
un composé de manganèse (Mn) ; et
du bore (B), un composé de bore (B) ou une combinaison de ceux-ci ;
dans lequel le composé de manganèse (Mn) inclut un oxyde de lithium et de manganèse ;
dans lequel la couche de revêtement inclut en outre une phase amorphe vitreuse hyaline qui inclut un mélange de la phase spinelle et de la phase sel gemme ; et
la phase amorphe vitreuse hyaline est dérivée à partir du composé de bore (B) ; et
dans lequel la phase spinelle et la phase sel gemme sont dérivées à partir du composé de manganèse (Mn) ;
dans lequel la particule d'oxyde métallique de lithium présente un gradient de concentration en nickel ;
dans lequel le gradient de concentration en nickel présente une forme selon laquelle la concentration diminue depuis le centre de la particule en direction de la surface ;
dans lequel le gradient de concentration en nickel est compris entre 50 % et 95 % de la longueur du rayon de la particule à partir du centre de la particule ; et
dans lequel le gradient de concentration en nickel présente une forme selon laquelle la concentration diminue depuis le centre de la particule en direction de la surface jusqu'à ce que la particule présente une teneur en nickel de 40 mol % à 90 % de la longueur du rayon de la particule lorsque la concentration en nickel au centre de la particule est considérée comme étant égale à 100 mol %.

2. Matériau actif d'électrode positive selon la revendication 1, dans lequel le composé de bore (B) inclut un borate de lithium, un dérivé de celui-ci, un mélange de ceux-ci ou une combinaison de ceux-ci.

3. Matériau actif d'électrode positive selon la revendication 1, dans lequel
le rapport en poids de [un composé de manganèse (Mn)] sur [du bore (B), un composé de bore (B) ou une combinaison de ceux-ci]dans la couche de revêtement est compris dans une plage allant de 1:1 à 1:10.

4. Procédé de préparation d'un matériau actif d'électrode positive pour une batterie rechargeable au lithium selon la revendication 1, le procédé comprenant :
la préparation d'une particule d'oxyde métallique de lithium telle que définie selon la revendication 1; et
la réalisation d'un traitement thermique sur un mélange des particules d'oxyde métallique de lithium, d'un matériau source de Mn et d'un matériau source de B ;
dans lequel, au cours du processus de traitement thermique, le matériau source de Mn est transformé en le composé de manganèse (Mn) et le matériau source de B est transformé en le bore (B), en le composé de bore (B) ou en la combinaison de ceux-ci de telle sorte que chaque forme transformée revête la surface des particules d'oxyde métallique de lithium ;
dans lequel le traitement thermique est réalisé dans une plage de températures allant de 150 à 400 °C ; et dans lequel le matériau source de Mn inclut du carbonate de manganèse (MnCO₃), de l'hydroxyde de manganèse [Mn(OH)₂], de l'oxyde de manganèse (MnO₂) ou une combinaison de ceux-ci.

5. Procédé de préparation selon la revendication 4, dans lequel
le traitement thermique inclut :
un chauffage à une vitesse de montée en température de 2 à 10 °C/min jusqu'à ce que la température atteigne la plage de températures allant de 150 à 400 °C ; et
la réalisation du traitement thermique tout en maintenant la température atteinte dans ladite plage de températures.

6. Procédé de préparation selon la revendication 5, dans lequel
la réalisation du traitement thermique tout en maintenant la température atteinte dans ladite plage de températures est mise en œuvre pendant 2 à 10 heures.

7. Procédé de préparation selon la revendication 4, dans lequel
le mélange contient de 0,01 à 1 partie en poids du matériau source de Mn et de 0,01 à 2 parties en poids du matériau source de B pour 100 parties en poids de la particule d'oxyde métallique de lithium.

8. Procédé de préparation selon la revendication 4, comprenant en outre
le fait que la préparation de la particule d'oxyde métallique de lithium est effectuée au moyen d'un procédé de coprécipitation et que, lors de la préparation de la particule d'oxyde métallique de lithium, des particules qui présentent un gradient de concentration en nickel sont préparées en utilisant une solution aqueuse de deux types de sels métalliques qui présentent des concentrations molaires différentes en nickel.
